# EUROPEAN PATENT SPECIFICATION

(11) **EP 3 722 074 B1**
(45) Date of publication and mention of the grant of the patent: **08.06.2022**
(21) Application number: 19020275.4
(22) Date of filing: 09.04.2019
(51) Int. Cl.: B29C 64/124, B29C 64/35, B29C 64/386, B33Y 10/00, B33Y 40/20, B33Y 50/00

(54) **METHOD OF PREVENTING FLUID COLLECTION / SUCTION IN ADDITIVE MANUFACTURING OF 3D OBJECTS**
VERFAHREN ZUR VERHINDERUNG VON FLÜSSIGKEITSSAMMLUNG/-ABSAUGUNG BEI DER GENERATIVEN FERTIGUNG VON 3D-OBJEKTEN
PROCÉDÉ DE PRÉVENTION DE COLLECTE / D'ASPIRATION DE FLUIDE DANS UNE FABRICATION ADDITIVE D'OBJETS EN 3D

(43) Date of publication of application: 14.10.2020
(73) Proprietor: DENTSPLY SIRONA Inc., York, PA 17401 (US); Sirona Dental Systems GmbH, 64625 Bensheim (DE)
(72) Inventor: Stahl, Christian, 64625 Bensheim (DE); Weiß, Daniel, 64625 Bensheim (DE); Tanaka, Simon, 64625 Bensheim (DE); Schmidt, Christian, 64625 Bensheim (DE)
(74) Representative: Özer, Alpdeniz

(56) References cited:
- WO-A2-95/29053
- US-A1- 2014 170 591
- US-A1- 2014 203 463
- US-A1- 2017 355 132

## Description

### TECHNICAL FIELD OF THE INVENTION

The present invention relates to a method of generating and post-processing a 3D object with an additive manufacturing system.

### BACKGROUND ART OF THE INVENTION

In additive manufacturing, a three-dimensional object is printed layer-by-layer through light-based curing of a liquid printing medium i.e., a liquid photocurable resin, which is selectively cured under the influence of UV radiation. In commonly known variations of additive manufacturing such as SL (Stereolithography) or DLP (Digital Light Processing), the 3D objects are preferably pulled upside-down from the liquid printing medium by means of a platform. Depending on the geometry of the 3D object, puddles of uncured liquid resin may remain in the fluid-collecting, basin-like, open regions of the 3D object.

In the prior art, the printed 3D objects are manually released from the platform immediately after printing, and the puddles are emptied manually before treatment, for example through turning the 3D object over.

In contrast thereto, in the additive manufacturing solution of the present applicant as disclosed in Appl. No. EP19160123.6, the 3D object is not removed from the platform directly after the printing but is transferred attached to the platform by means of a transport container, without changing its vertical orientation into a post-processing apparatus where it is washed, dried and post-cured. When the liquid resin puddles are formed on the 3D object then the liquid resin contained in these puddles is further introduced into the washing tank of the post-processing apparatus. Thereby, the lifetime of the washing medium, such as isopropyl alcohol, is significantly reduced. In addition, the same puddles that were filled with liquid resin during printing are filled with the liquid washing medium after the washing, and thus the liquid washing medium must be completely evaporated when drying the printed 3D object. As a result, the treatment time required for the drying may increase considerably.

Hence, the fluid-collecting, basin-like, open regions of the 3D objects cause a problem not only during the generation but also during the post-processing. Depending on the geometry of the 3D object, uncured liquid resin or liquid washing medium may also be pulled up into fluid-sucking, dome-like, open regions of the 3D object, and thus the fluid-sucking, dome-like, open regions also cause a problem during the generation and the post- processing, respectively.

EP0757621B1 discloses a method of providing a three-dimensional object to be built layer-by-layer through selective solidification of a solidifiable medium wherein the evacuation of unsolidified medium from a hollow atmospherically closed region is enabled through further including a vent hole and a drain hole into the three-dimensional object.

US2017/0355132A1, corresponding to the preamble of claim 1, discloses a three-dimensional printing of objects with breathing orifices. US2014/0170591A1 discloses a dental arch model and a method of making the same. US2014/0203463A1 discloses a multi-layer surgical guide.

### DISCLOSURE OF THE INVENTION

An objective of the present invention is to overcome the disadvantages of the prior art and to provide a method of generating and post-processing a 3D object without being turned over in an additive manufacturing system having an additive manufacturing apparatus and a post-processing apparatus.

This objective has been achieved by the method as defined in claim 1. The subject-matters of the dependent claims relate to further developments.

The present invention provides a method of generating and post-processing a 3D object with an additive manufacturing system comprising: generating the 3D object by an additive manufacturing apparatus which generates the 3D object corresponding to a prepared digital 3D model, attached to a platform be gradually moving upwards, out of a fluid resin in a vat; and post-processing the 3D object by at least one post-processing apparatus which performs at least one of washing, drying and curing of the 3D object received and maintained in the state attached to the platform, during the post-processing. The method comprises: a step of preparing the digital 3D model through determining fluid-collecting, basin-like, open regions and fluid-sucking, dome-like open regions of the digital 3D model orientated in the said state relative to the platform, and a including at least one drain channel and at least one vent channel into the fluid-collecting, basin-like open region and/or the fluid-sucking, dome-like, open region in the digital 3D model respectively for preventing collection of fluid and suction of fluid during the generation process and the post-processing process.

A major advantageous effect of the present invention is that the fluid i.e., the liquid photocurable resin or the liquid washing medium collected in the basin-like, open region are immediately emptied via the drain channels under the action of gravity during the printing process and the washing process without the need of turning the 3D object over, and thus the user can be prevented from getting into physical contact with the fluids. Thereby, also unnecessary wasting of the fluids can be prevented. Furthermore, the drying time, and thus the overall manufacturing time can be reduced. Hence, the production costs can be reduced. Another major advantageous effect of the present invention is that the fluid sucked in the dome-like, opens region can be immediately emptied through the removal of the negative pressure via the vent channels under the action of atmospheric pressure during the printing process and the washing process. Thereby, the mechanical effects of the fluids on the additive manufacturing system such as torque, suction forces, weight can be prevented. Thereby, the movable parts of the additive manufacturing system can be operated more smoothly and forces acting on the fragile printed parts can be reduced. According to the present invention, the user may be allowed to manually select and input on a display of the digital 3D model the locations of the inlets and/or outlets of the drain channels respectively to be included into the digital 3D model. However, the method is not limited to the manual selection. According to the present invention, the lowest point in the fluid-collecting, basin-like, open region of the digital 3D model may be automatically found i.e., through the algorithm of a computer-program and set as the location of the inlet of the drain channel. In addition, the user may be allowed to manually select and input on the display the location of the corresponding outlet of the drain channel to be included into the digital 3D model. Alternatively, the manual selection and input of the corresponding outlet may be also omitted and found automatically at a location lying lower than the corresponding inlet of the drain channel through the algorithm of the computer-program. The algorithm for including the drain channels in the method of the present invention can also be used for the inclusion of the vent channels through a rotation of the digital 3D model by 180 degrees. According to the present invention the user may be allowed to manually select and input on the display of the digital 3D model the locations of the inlets and/or outlets of the vent channels respectively to be included into the digital 3D model. However, since the method is not limited to the manual selection, the highest point in the fluid-sucking, dome-like, open region of the digital 3D model may be automatically found and set as the location of the outlet of the vent channel by means of the software algorithm. In addition, the user may be allowed to manually select and input on the display the location of the corresponding inlet of the vent channel to be included into the digital 3D model. Alternatively, the manual selection and input of the corresponding inlet may be also omitted and found automatically at a location lying higher than the corresponding outlet of the vent channel by means of the software algorithm.

According to the present invention, the inlets and outlets of drain channels as well as the inlets and outlets of the vent channels may be found based on one or more criteria including that the inclination of the drain/vent channel is maximized, and/or the length of the drain/vent channel is minimized. The drain/vent channels may have any shape in order to remain entirely within the digital 3D model. For instance, the drain/vent channels may have one or more segments being straight and/or one or more segments which are curved, and the cross section may be constant or non-constant.

According to the present invention, the surface areas of the digital 3D model where the locations of the inlets and/or outlets of the drain channels and/or vent channels may be found may be restricted. In addition, the volume of the digital 3D model where the drain channels and/or vent channels may pass through may also be restricted. Alternatively, in a complimentary manner, the surface areas of the digital 3D model where the locations of the inlets and/or outlets of the drain channels and/or vent channels must not be found may be restricted. In addition, the volume of the digital 3D model where the drain channels and/or vent channels must not pass through may also be restricted. In case of these restrictions, the above mentioned lowest/highest points are found under consideration of the restricted surface areas and the restricted volumes. Thereby, critical surface areas or critical sub volumes of the digital 3D model can be prevented from including drain/vent channels. However, the method is not limited to an automatic restriction. According to the present invention, the user may be allowed to selectively mark on the display of the digital 3D model the restricted surfaces and/or the restricted volumes.

The method of the present invention may be applied to prepare any 3D object for additive manufacturing. Preferably, the method of the present invention is applied to 3D objects used for dental treatment, for instance dental appliances and dental restorations. According to the present invention, the method may be provided in form of a computer-program according to claim 12.

The computer-program may be provided separately or together with the additive manufacturing system. The codes of the computer-program may be stored in a computer-readable storage means according to claim 13.

The storage means may be provided separately from or together with the additive manufacturing system.

### BRIEF DESCRIPTION OF THE DRAWINGS

In the subsequent description, further aspects and advantageous effects of the present invention will be described in more detail by using exemplary embodiments and by referring to the drawings, wherein
Fig. 1 - is a partial schematic cross-sectional view of an additive manufacturing apparatus which generates a 3D object having a drain channel, corresponding to the digital 3D model prepared through the method according to an embodiment of the present invention;
Fig. 2 - is a partial schematic cross-sectional view of an additive manufacturing apparatus which generates a 3D object having a vent channel, corresponding to the digital 3D model prepared through the method according to an embodiment of the present invention;
Fig. 3 - is a schematic cross-sectional view of an additive manufacturing system for generating and post-processing of the 3D object having a drain channel, corresponding to the digital 3D model prepared through the method according to an embodiment of the present invention.

The reference numbers shown in the drawings denote the elements as listed below and will be referred to in the subsequent description of the exemplary embodiments:
1. Additive manufacturing system
2. Additive manufacturing apparatus
3. 3D object
4. Platform
5. Fluid
   5a. Liquid photocurable resin
   5b. Liquid washing medium (e.g. Isopropyl alcohol)
6. Vat
7. Post-processing apparatus
8. Basin-like open region
9. Dome-like open region
10. Drain channel
11. Vent channel
12. Inlet
13. Outlet
14. Dental appliance

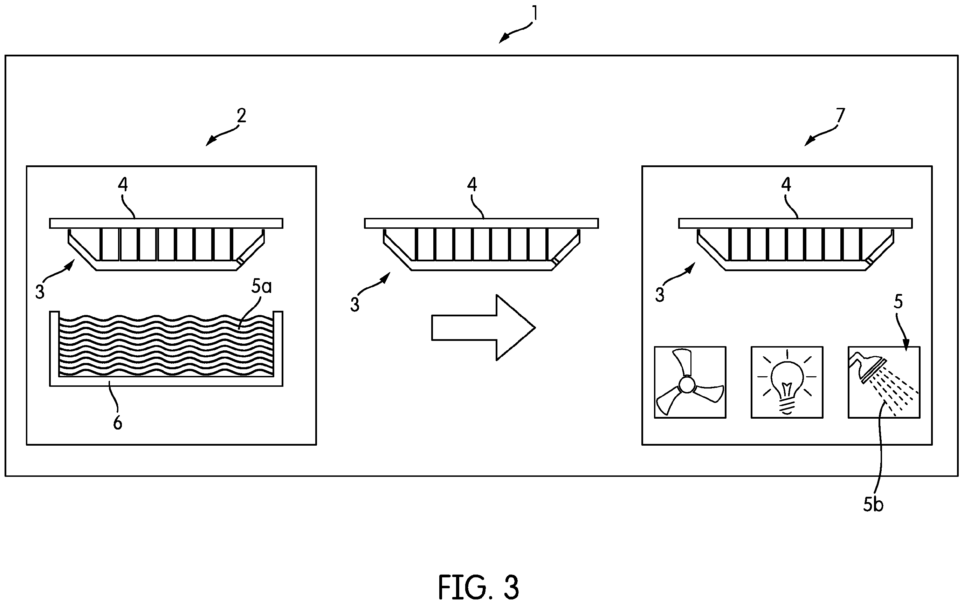

Fig. 3 shows an additive manufacturing system (1) which has an additive manufacturing apparatus (2) for generating a 3D object (3) that corresponds to a previously prepared digital 3D model, wherein the 3D object (3) is attached to a platform (4) that can be gradually moved upwards, out of a liquid photocurable resin (5a) in a vat (6). The additive manufacturing system (1) also has a post-processing apparatus (7) for performing at least one of washing, drying and curing the 3D object (3) received and maintained in the state attached to the platform (4) during the post-processing. After the 3D object (3) is generated through the manufacturing apparatus (2) it is transferred on the platform (4) by means of a transport container (not shown), without changing its vertical orientation into the post-processing apparatus (7).

The present invention provides a method of preparing the digital 3D model to be generated and post-processed with the additive manufacturing system (1).

In alternative embodiments, the method is implemented through a computer-program (not shown) that provides input to the additive manufacturing system (1). The computer-program may include user-selectable or preset modes including a manual mode, an automatic mode and/or a semi-automatic mode for preparing the digital 3D model as will be described in more detail in the following.

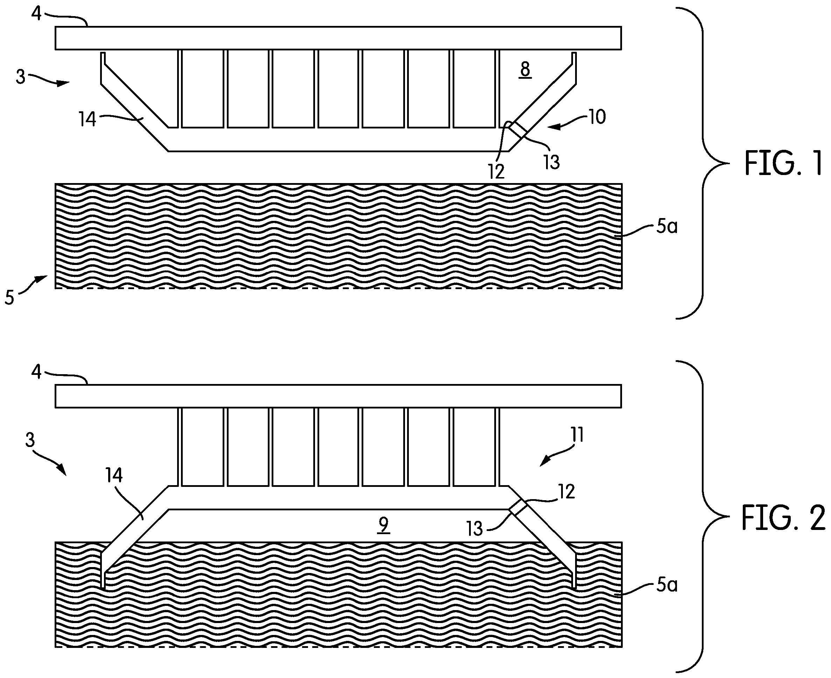

In an initial step, the digital 3D model to be overworked is provided. In a next step, the fluid-collecting, basin-like, open regions (8) and the fluid-sucking, dome-like, open regions (9) of the digital 3D model are determined when the digital 3D model is orientated in the above-mentioned state relative to the platform (4) i.e., in the printing state. In Fig. 1 and Fig. 2, two different 3D objects (3) have been illustrated, wherein the former one has at least one fluid-collecting, basin-like, open region (8) whereas the latter one has at least one fluid-sucking, dome-like, open region (9). In a next step of the method, at least one drain channel (10) is included into the fluid-collecting, basin-like, open region (8) in the digital 3D model as shown in Fig. 1 for preventing collection of fluid (5; 5a, 5b) during the generation process and the post-processing process. For the sake of simplicity only one drain channel (10) has been illustrated. Similarly, as shown in Fig. 2, at least one vent channel (11) is included into the fluid-sucking, dome-like, open region (9) in the digital 3D model for preventing suction of fluid (5; 5a,5b) during the generation process and the post-processing process.

In another embodiment, the digital 3D model is displayed to a user on a display (not shown). The user can perform the determination step and the inclusion step manually on the display. Alternatively, these steps may be performed automatically or semiautomatically through algorithms of the computer-program.

In another embodiment, the user can manually select and input on the display the locations of the inlets (12) and/or outlets (13) of the drain channels (10), respectively, to be included into the digital 3D model. The path of the drain channels (10) within the digital 3D object (3) may be manually defined on the display by the user or automatically calculated.

In another embodiment, the lowest point in the fluid-collecting, basin-like, open region (8) of the digital 3D model can be automatically found and set as the location of the inlet (12) of the drain channel (10). In addition, the user can manually select and input on the display the location of the corresponding outlet (13) of the drain channel (10) to be included into the digital 3D model.

In another embodiment, the outlet (13) for the drain channel (10) can also be automatically found at a location lying lower than the corresponding inlet (12) of the drain channel (10).

In another embodiment, one or more outlets (13) for the drain channels (10) are automatically found based on one or more criteria including that the inclination of the drain channel (10) is maximized and/or the length of the drain channel (10) is minimized such that the drain channel (10) remains entirely within the digital 3D model.

In another embodiment, the user can manually select and input on the display the locations of the inlets (12) and/or outlets (13) of the vent channels (11) respectively to be included into the digital 3D model. The path of the vent channels (11) within the digital 3D object (3) may be manually defined on the display by the user or automatically calculated.

In another embodiment, the highest point in the fluid-sucking, dome-like, open region (9) of the digital 3D model can be automatically found and set as the location of the outlet (13) of the vent channel (11). In addition, the user can manually select and input on the display the location of the corresponding inlet (12) of the vent channel (11) to be included into the digital 3D model.

In another embodiment, the inlet (12) for the vent channel (11) can also be automatically found at a location lying higher than the corresponding outlet (13) of the vent channel (11).

In another embodiment, one or more inlets (12) for the vent channels (11) are automatically found based on one or more criteria including that the inclination of the vent channel (11) is maximized and/or the length of the vent channel (11) is minimized such that the vent channel (11) remains entirely within the digital 3D object (3).

In other alternative embodiments, the drain channels (10) or the vent channels (11) have one or more straight segments and/or one or more curved segments with constant or non-constant cross section.

In another embodiment, it is possible to restrict the surface areas of the digital 3D model where the locations of the inlets (12) and/or outlets (13) of the drain channels (10) and/or vent channels (11) may be found. In addition, it is also possible to restrict the volume of the digital 3D model where the drain channels (10) and/or vent channels (11) may pass through.

In another alternative embodiment, it is possible to restrict the surface areas of the digital 3D model where the locations of the inlets (12) and/or outlets (13) of the drain channels (10) and/or vent channels (11) must not be found. Similarly, it is also possible to restrict the volume of the digital 3D model where the drain channels (10) and/or vent channels (11) must not pass through. In case the above-mentioned restrictions are imposed, the lowest/highest points are found under consideration of these restrictions.

In another embodiment, the user is allowed to selectively mark on the display of the digital 3D model the restricted surface areas and/or the restricted volumes. Alternatively, the surface area and/or the volume are automatically restricted in accordance with predetermined conditions. Such conditions may relate, for instance to the mechanical stability, proper operation or the visual appearance of the 3D object.

In another embodiment, the digital 3D object (3) corresponds to a dental appliance (14).

## Claims

1. A method of generating and post-processing a 3D object (3) with an additive manufacturing system (1) comprising: generating the 3D object (3) by an additive manufacturing apparatus (2) which generates the 3D object (3) corresponding to a prepared digital 3D model, attached to a platform (4) by gradually moving upwards, out of a liquid photocurable resin (5a) in a vat (6); and post-processing the 3D object (3) by least one post-processing apparatus (7) which performs at least one of washing, drying and curing the 3D object (3) received and maintained in the state attached to the platform (4) during the post-processing, the method being **characterized by** comprising:
a step of preparing the digital 3D model through
determining fluid-collecting, basin-like, open regions (8) and fluid-sucking, dome-like, open regions (9) of the digital 3D model orientated in said state relative to the platform (4), and
including at least one drain channel (10) and at least one vent channel (11) into the fluid-collecting, basin-like, open region (8) and the fluid-sucking, dome-like, open region (9) in the digital 3D model respectively for preventing collection of fluid (5a, 5b) and suction of fluid (5a,5b) during the generation process and the post-processing process.

2. The method according to claim 1, **characterized by** further comprising:
a step of displaying the digital 3D model to a user on a display; and
a step of allowing the user to manually select and input on the display the locations of the inlets (12) and/or outlets (13) of the drain channels (10) and/or the vent channels (11) respectively to be included into the digital 3D model.

3. The method according to claim 2, **characterized by** further comprising:
a step of finding the lowest point in the fluid-collecting, basin-like, open region (8) of the digital 3D model and setting the lowest point as the location of the inlet (12) of the drain channel (10); and
a step of allowing the user to manually select and input on the display the location of the corresponding outlet (13) of the drain channel (10) to be included into the digital 3D model, or
a step of finding at least one outlet (13) for the drain channel (10) at a location lying lower than the corresponding inlet (12) of the drain channel (10).

4. The method according to claim 3, **characterized in that** one or more outlets (13) for the drain channel (10) are found based on one or more criteria including that the inclination of the drain channel (10) is maximized and/or the length of the drain channel (10) is minimized, wherein the drain channel (10) remains entirely within the digital 3D object (3).

5. The method according to any one of claims 2 to 4, **characterized by** further comprising:
a step of finding the highest point in the fluid-sucking, dome-like, open region (9) of the digital 3D model and setting the highest point as the location of the outlet (13) of the vent channel (11); and
a step of allowing the user to manually select and input on the display the location of the corresponding inlet (12) of the vent channel (11) to be included into the digital 3D model, or
a step of finding at least one inlet (12) for the vent channel (11) at a location lying higher than the corresponding outlet (13) of the vent channel (11).

6. The method according to claim 5, **characterized in that** one or more inlets (12) for the vent channel (11) are found based on one or more criteria including that the inclination of the vent channel (11) is maximized and/or the length of the vent channel (11) is minimized, wherein the vent channel (11) remains entirely within the digital 3D object (3).

7. The method according to any one of claims 2 to 6, **characterized by** comprising:
a step of restricting the surface areas of the digital 3D model where the locations of the inlets (12) and/or outlets (13) of the drain channels (10) and/or vent channels (11) may be found, and/or to restrict the volume of the digital 3D model where the drain channels (10) and/or vent channels (11) may pass through, wherein the lowest/highest points are found under consideration of the restriction.

8. The method according to any one of claims 2 to 6, **characterized by** comprising:
a step of restricting the surface areas of the digital 3D model where the locations of the inlets (12) and/or outlets (13) of the drain channels (10) and/or vent channels (11) must not be found, and/or to restrict the volume of the digital 3D model where the drain channels (10) and/or vent channels (11) must not pass through, wherein the lowest/highest points are found under consideration of the restriction.

9. The method according to claim 7 or 8, **characterized by** comprising
a step of allowing the user to selectively mark on the display of the digital 3D model the restricted surface areas and/or the restricted volumes.

10. The method according to any one of claims 1 to 9, **characterized in that** the drain channels (10) or the vent channels (11) have one or more segments being straight or one or more segments being curvilinear where the straight or curvilinear segments have constant or non-constant cross section.

11. The method according to any one of claims 1 to 11, **characterized in that** the digital 3D object (3) corresponds to a dental appliance (14).

12. A computer-program comprising codes for causing the additive manufacturing system (1) to execute the method according any one of claims 1 to 11.

13. A computer-readable storage means comprising the computer-program according to claim 12.

## Patentansprüche

1. Verfahren zum Erzeugen und Nachbearbeiten eines 3D-Objekts (3) mit einem System (1) zur additiven Fertigung, umfassend: Erzeugen des 3D-Objekts (3) durch eine Vorrichtung (2) zur additiven Fertigung, die das 3D-Objekt (3) entsprechend einem vorbereiteten digitalen 3D-Modell, das an einer Plattform (4) befestigt ist, durch allmähliches Aufwärtsbewegen aus einem flüssigen photohärtbaren Harz (5a) in einem Bottich (6) erzeugt; und Nachbearbeiten des 3D-Objekts (3) durch mindestens eine Nachbearbeitungsvorrichtung (7), die mindestens eines durchführt von Waschen, Trocknen und Aushärten des 3D-Objekts (3), das während des Nachbearbeitens in dem an der Plattform (4) befestigten Zustand aufgenommen und gehalten wird, wobei das Verfahren **dadurch gekennzeichnet ist, dass** es umfasst:
einen Schritt des Vorbereitens des digitalen 3D-Modells durch
Bestimmen von flüssigkeitssammelnden, beckenartigen, offenen Bereichen (8) und flüssigkeitssaugenden, domartigen, offenen Bereichen (9) des digitalen 3D-Modells, das in dem Zustand relativ zur Plattform (4) ausgerichtet ist, und
Einschließen eines Ablaufkanals (10) und mindestens eines Entlüftungskanals (11) in den flüssigkeitssammelnden, beckenartigen, offenen Bereich (8) bzw. den flüssigkeitsabsaugenden, domartigen, offenen Bereich (9) in dem digitalen 3D-Modell, um jeweils das Sammeln von Flüssigkeit (5a, 5b) und das Absaugen von Flüssigkeit (5a, 5b) während des Erzeugungsverfahrens und des Nachbearbeitungsverfahrens zu verhindern.

2. Verfahren nach Anspruch 1, **dadurch gekennzeichnet, dass** es ferner umfasst:
einen Schritt des Anzeigens des digitalen 3D-Modells für einen Benutzer auf einer Anzeige; und
einen Schritt des Ermöglichens des Benutzers, die Standorte der Einlässe (12) und/oder Auslässe (13) der Ablaufkanäle (10) und/oder der Entlüftungskanäle (11), die jeweils in das digitale 3D-Modell eingeschlossen werden sollen, manuell auszuwählen und auf der Anzeige einzugeben.

3. Verfahren nach Anspruch 2, **dadurch gekennzeichnet, dass** es ferner umfasst:
einen Schritt des Findens des tiefsten Punktes in dem flüssigkeitssammelnden, beckenartigen, offenen Bereich (8) des digitalen 3D-Modells und Einstellens des tiefsten Punktes als Standort des Einlasses (12) des Ablaufkanals (10); und
einen Schritt des Ermöglichens des Benutzers, den Standort des entsprechenden Auslasses (13) des Ablaufkanals (10), der in das digitale 3D-Modell eingeschlossen werden soll, manuell auszuwählen und auf der Anzeige einzugeben, oder
einen Schritt des Findens mindestens eines Auslasses (13) für den Ablaufkanal (10) an einem Standort, der tiefer liegt als der entsprechende Einlass (12) des Ablaufkanals (10).

4. Verfahren nach Anspruch 3, **dadurch gekennzeichnet, dass** ein oder mehrere Auslässe (13) für den Ablaufkanal (10) basierend auf einem oder mehreren Kriterien gefunden werden, einschließlich, dass die Neigung des Ablaufkanals (10) maximiert ist, und/oder die Länge des Ablaufkanals (10) minimiert ist, wobei der Ablaufkanal (10) vollständig innerhalb des digitalen 3D-Objekts (3) verbleibt.

5. Verfahren nach einem der Ansprüche 2 bis 4, **dadurch gekennzeichnet, dass** es ferner umfasst:
einen Schritt des Findens des höchsten Punktes in dem flüssigkeitssaugenden, domartigen, offenen Bereich (9) des digitalen 3D-Modells und Einstellens des höchsten Punktes als Standort des Auslasses (13) des Entlüftungskanals (11); und
einen Schritt des Ermöglichens des Benutzers, den Standort des entsprechenden Einlasses (12) des Entlüftungskanals (11), der in das digitale 3D-Modell eingeschlossen werden soll, manuell auszuwählen und auf der Anzeige einzugeben, oder
einen Schritt des Findens mindestens eines Einlasses (12) für den Entlüftungskanal (11) an einem Standort, der höher liegt als der entsprechende Auslass (13) des Entlüftungskanals (11).

6. Verfahren nach Anspruch 5, **dadurch gekennzeichnet, dass** ein oder mehrere Einlässe (12) für den Entlüftungskanal (11) basierend auf einem oder mehreren Kriterien gefunden werden, einschließlich, dass die Neigung des Entlüftungskanals (11) maximiert ist, und/oder die Länge des Entlüftungskanals (11) minimiert ist, wobei der Entlüftungskanal (11) vollständig innerhalb des digitalen 3D-Objekts (3) verbleibt.

7. Verfahren nach einem der Ansprüche 2 bis 6, **dadurch gekennzeichnet, dass** es umfasst:
einen Schritt des Einschränkens der Oberflächenbereiche des digitalen 3D-Modells, wo die Standorte der Einlässe (12) und/oder Auslässe (13) der Ablaufkanäle (10) und/oder Entlüftungskanäle (11) gefunden werden können, und/oder um das Volumen des digitalen 3D-Modells einzuschränken, wo die Ablaufkanäle (10) und/oder Entlüftungskanäle (11) hindurchgehen können, wobei die tiefsten/höchsten Punkte unter Berücksichtigung der Einschränkung gefunden werden.

8. Verfahren nach einem der Ansprüche 2 bis 6, **dadurch gekennzeichnet, dass** es umfasst:
einen Schritt des Einschränkens der Oberflächenbereiche des digitalen 3D-Modells, wo die Standorte der Einlässe (12) und/oder Auslässe (13) der Ablaufkanäle (10) und/oder Entlüftungskanäle (11) nicht gefunden werden dürfen, und/oder um das Volumen des digitalen 3D-Modells dort einzuschränken, wo die Ablaufkanäle (10) und/oder Entlüftungskanäle (11) nicht hindurchgehen dürfen, wobei die tiefsten/höchsten Punkte unter Berücksichtigung der Einschränkung gefunden werden.

9. Verfahren nach Anspruch 7 oder 8, **dadurch gekennzeichnet, dass** es umfasst
einen Schritt des Ermöglichens des Benutzers, die eingeschränkten Oberflächenbereiche und/oder die eingeschränkten Volumina selektiv auf der Anzeige des digitalen 3D-Modells zu markieren.

10. Verfahren nach einem der Ansprüche 1 bis 9, **dadurch gekennzeichnet, dass** die Ablaufkanäle (10) oder die Entlüftungskanäle (11) ein oder mehrere Segmente aufweisen, die gerade sind, oder ein oder mehrere Segmente, die krummlinig sind, wobei die geraden oder krummlinigen Segmente einen konstanten oder nicht konstanten Querschnitt aufweisen.

11. Verfahren nach einem der Ansprüche 1 bis 11, **dadurch gekennzeichnet, dass** das digitale 3D-Objekt (3) einem Dentalgerät (14) entspricht.

12. Computerprogramm, das Codes umfasst, um zu bewirken, dass das System (1) zur additiven Fertigung das Verfahren nach einem der Ansprüche 1 bis 11 ausführt.

13. Computerlesbare Speichereinrichtung, die das Computerprogramm nach Anspruch 12 umfasst.

## Revendications

1. Procédé de génération et de post-traitement d'un objet en 3D (3) au moyen d'un système de fabrication additive (1) comprenant : la génération de l'objet en 3D (3) par un appareil de fabrication additive (2) qui génère l'objet en 3D (3) correspondant à un modèle numérique 3D préparé, fixé à une plate-forme (4) par déplacement progressif vers le haut, à partir d'une résine liquide photodurcissable (5a) dans un bac (6) ; et le post-traitement de l'objet en 3D (3) par au moins un appareil de post-traitement (7) qui effectue au moins une action parmi le lavage, le séchage et le durcissement de l'objet en 3D (3) reçu et maintenu dans l'état fixé à la plate-forme (4) pendant le post-traitement, le procédé étant **caractérisé en ce qu'**il comprend :
une étape de préparation du modèle numérique 3D par
détermination des régions ouvertes (8) de collecte de fluide de type bassin et des régions ouvertes (9) d'aspiration de fluide de type dôme du modèle numérique 3D orienté dans ledit état par rapport à la plate-forme (4), et
comprenant au moins un canal de vidange (10) et au moins un canal d'évent (11) dans la région ouverte (8) de collecte de fluide de type bassin et la région ouverte (9) d'aspiration de fluide de type dôme dans le modèle numérique 3D respectivement pour empêcher la collecte de fluide (5a, 5b) et l'aspiration de fluide (5a, 5b) pendant le processus de génération et le processus de post-traitement.

2. Procédé selon la revendication 1, **caractérisé en ce qu'**il comprend en outre :
une étape d'affichage du modèle numérique 3D à l'intention d'un utilisateur sur un écran ; et
une étape permettant à l'utilisateur de sélectionner et d'entrer manuellement sur l'écran les emplacements des entrées (12) et/ou des sorties (13) des canaux de vidange (10) et/ou des canaux d'évent (11) respectivement à inclure dans le modèle numérique 3D.

3. Procédé selon la revendication 2, **caractérisé en ce qu'**il comprend en outre :
une étape consistant à trouver le point le plus bas dans la région ouverte (8) de collecte de fluide de type bassin du modèle numérique 3D et à définir le point le plus bas comme emplacement de l'entrée (12) du canal de vidange (10) ; et
une étape permettant à l'utilisateur de sélectionner et d'entrer manuellement sur l'écran l'emplacement de la sortie correspondante (13) du canal de vidange (10) à inclure dans le modèle numérique 3D, ou
une étape consistant à trouver au moins une sortie (13) pour le canal de vidange (10) au niveau d'un emplacement situé plus bas que l'entrée correspondante (12) du canal de vidange (10).

4. Procédé selon la revendication 3, **caractérisé en ce qu'**une ou plusieurs sorties (13) pour le canal de vidange (10) sont trouvées sur la base d'un ou plusieurs critères dont le fait que l'inclinaison du canal de vidange (10) est maximisée et/ou la longueur du canal de vidange (10) est minimisée, le canal de vidange (10) restant entièrement à l'intérieur de l'objet numérique en 3D (3).

5. Procédé selon l'une quelconque des revendications 2 à 4, **caractérisé en ce qu'**il comprend en outre :
une étape consistant à trouver le point le plus élevé dans la région ouverte (9) d'aspiration de fluide de type dôme du modèle numérique 3D et à définir le point le plus élevé comme emplacement de la sortie (13) du canal d'évent (11) ; et
une étape permettant à l'utilisateur de sélectionner et d'entrer manuellement sur l'écran l'emplacement de l'entrée correspondante (12) du canal d'évent (11) à inclure dans le modèle numérique 3D, ou
une étape consistant à trouver au moins une entrée (12) pour le canal d'évent (11) au niveau d'un emplacement situé plus haut que la sortie correspondante (13) du canal d'évent (11).

6. Procédé selon la revendication 5, **caractérisé en ce qu'**une ou plusieurs entrées (12) pour le canal d'évent (11) sont trouvées sur la base d'un ou plusieurs critères dont le fait que l'inclinaison du canal d'évent (11) est maximisée et/ou la longueur du canal d'évent (11) est minimisée, le canal d'évent (11) restant entièrement à l'intérieur de l'objet numérique en 3D (3).

7. Procédé selon l'une quelconque des revendications 2 à 6, **caractérisé en ce qu'**il comprend :
une étape de restriction des surfaces du modèle numérique 3D où les emplacements des entrées (12) et/ou des sorties (13) des canaux de vidange (10) et/ou des canaux d'évent (11) peuvent se trouver, et/ou de restriction du volume du modèle numérique 3D où les canaux de vidange (10) et/ou les canaux d'évent (11) peuvent passer, les points les plus bas/les plus hauts étant trouvés en tenant compte de la restriction.

8. Procédé selon l'une quelconque des revendications 2 à 6, **caractérisé en ce qu'**il comprend :
une étape de restriction des surfaces du modèle numérique 3D où les emplacements des entrées (12) et/ou des sorties (13) des canaux de vidange (10) et/ou des canaux d'évent (11) ne doivent pas se trouver, et/ou de restriction du volume du modèle numérique 3D où les canaux de vidange (10) et/ou les canaux d'évent (11) ne doivent pas passer, les points les plus bas/les plus hauts étant trouvés en tenant compte de la restriction.

9. Procédé selon la revendication 7 ou 8, **caractérisé en ce qu'**il comprend
une étape permettant à l'utilisateur de repérer sélectivement sur l'écran du modèle numérique 3D les surfaces restreintes et/ou les volumes restreints.

10. Procédé selon l'une quelconque des revendications 1 à 9, **caractérisé en ce que** les canaux de vidange (10) ou les canaux d'évent (11) ont un ou plusieurs segments rectilignes ou un ou plusieurs segments curvilignes, les segments rectilignes ou curvilignes ayant une section transversale constante ou non constante.

11. Procédé selon l'une quelconque des revendications 1 à 11, **caractérisé en ce que** l'objet numérique en 3D (3) correspond à un appareil dentaire (14).

12. Programme informatique comprenant des codes pour amener le système de fabrication additive (1) à exécuter le procédé selon l'une quelconque des revendications 1 à 11.

13. Moyen de stockage lisible par ordinateur comprenant le programme informatique selon la revendication 12.
